# DEMANDE DE BREVET EUROPEEN

(11) **EP 4 635 291 A1**
(43) Date de publication de la demande: **22.10.2025**
(21) Numéro de dépôt: 24171114.2
(22) Date de dépôt: 18.04.2024
(51) Int. Cl.: A01G 9/02

(54) **MODULE ISOLANT VÉGÉTALISÉ POUR FAÇADES ET TOITURES DE BÂTIMENTS**

(71) Demandeur: On-Scènes, 33600 Pessac (FR)
(72) Inventeur: CARRÉ, Aurélien, 33600 PESSAC (FR)
(74) Mandataire: Ipside

(57) **Abrégé**

Module isolant végétalisé (100) pour recouvrir tout ou partie des façades/toitures d'un bâtiment, comportant une structure (10), comprenant une paroi avant (101), une paroi de fond (103) située au niveau d'une partie inférieure de la paroi avant (101), deux parois latérales (102a, 102b) positionnées de part et d'autres de la paroi avant (101) et de la paroi de fond (103), au moins une paroi de fixation (106a, 106b) située à l'opposé de la paroi avant (101), un substrat (13), et un système de fixation (16), ledit module comportant un système (12) de rétention d'eau et d'irrigation, ledit système comportant une réserve d'eau (121), au moins un conduit d'arrosage (125) comportant un orifice d'entrée (126) configuré pour capter l'eau de la réserve d'eau (121) pour irriguer des racines d'au moins une plante (17), ladite structure comportant au moins un trou de vidange (108) disposé sur la paroi de fond (103).

## Description

### DOMAINE TECHNIQUE

La présente invention appartient au domaine de la construction et de la rénovation de bâtiments.

La présente invention concerne plus particulièrement un module isolant végétalisé pour murs et toitures s'adaptant sur différents types de façades et de toitures de bâtiments.

La présente invention trouve une application directe dans l'isolation ainsi que la végétalisation de façades et toitures en béton, bois ou présentant un bardage métallique ou des bacs aciers.

### ETAT DE L'ART

Dans le domaine de la construction de bâtiments, l'amélioration de leurs performances énergétiques afin de réaliser des économies d'énergie et d'apporter plus de confort aux utilisateurs, est un des sujets qui connaît un fort développement ces dernières années.

Sur la première partie du 20^{ème} siècle, beaucoup de bâtiments étaient construits avec peu de matériaux d'isolation thermique. En effet, les moyens de chauffages de l'époque permettaient de compenser une isolation thermique peu efficace durant les saisons froides.

Le premier choc pétrolier des années 1970 a eu pour conséquence entre autres de changer certaines habitudes dans la construction, en commençant notamment à intégrer la notion d'isolation des façades et des toitures.

A partir de cette même période, la législation se renforce en France dans le domaine de la construction, en imposant une isolation thermique des bâtiments neufs. En parallèle, différents labels voient le jour pour inciter les particuliers et entreprises à isoler leur bâtiment.

A la fin du 20^{ème} siècle, la réglementation sur l'isolation thermique des bâtiments est renforcée.

A cette même période, la communauté internationale prend conscience de la nécessité de contrôler les émissions de gaz à effets de serres des pays industrialisés et en voie de développement, notamment par l'organisation des premières *Conférences des parties* (en anglais *Conférence of the Parties*, *COP*) et la signature en 1997 du protocole de Kyoto.

Par la suite, différentes réglementations thermiques (RT) en France voient le jour et permettent de définir de nouveaux objectifs en termes d'isolation (niveau de performance, ...).

Dernièrement, la France passe d'une réglementation thermique RT 2012 à une réglementation environnementale (RE 2020), qui est plus ambitieuse, exigeante et contraignante pour la filière construction.

En parallèle de ces évolutions réglementaires, des solutions innovantes émergent.

Historiquement, l'efficacité énergétique des habitations pouvait être améliorée grâce à l'isolation thermique par l'intérieur (ITI), en ajoutant par exemple des matériaux isolants sur les murs de certaines pièces. Si dans certains cas ce type de rénovation est adapté, pour d'autres habitations et bâtiments, il est très contraignant à mettre en oeuvre.

C'est ainsi que l'isolation thermique par l'extérieur (ITE) se développe, permettant tout comme l'isolation thermique par l'intérieur d'améliorer le confort thermique, aussi bien en saison hivernale qu'estivale, tout en restant économique.

En parallèle de l'isolation thermique par l'extérieur, la végétalisation des façades et des toitures est une technique qui se répand de plus en plus, et est une piste sérieuse pour augmenter l'efficacité énergétique des bâtiments, tout en replantant des végétaux qui vont favoriser la biodiversité dans ces nouveaux espaces.

Le document EP2052116 présente un procédé d'isolation thermique de la façade d'un bâtiment comprenant des étapes qui consistent à :
- fixer sur la face extérieure de la façade à traiter d'un bâtiment, un ensemble de panneaux ;
- disposer par projection sur ces panneaux assemblés un enduit.

En règle générale, les panneaux d'isolant sont fixés sur les murs porteurs des bâtiments au moyen de chevilles d'isolation qui permettent le maintien de l'isolation. Le mur peut également être préalablement recouvert d'une colle pour renforcer la tenue des panneaux. Les panneaux étant en polystyrènes expansés, un matériau perméable, une étape de finition consistant à recouvrir les panneaux d'un enduit ou d'un bardage en bois par exemple, est à prévoir. Ainsi, l'utilisation de ce type de solution nécessite tout d'abord de percer les murs qui vont recevoir les panneaux d'isolation, de préparer ensuite les surfaces pour coller les panneaux d'isolant, et de les recouvrir.

Ce type d'installation, qui ne comprend principalement qu'une solution thermique, peut s'avérer long et couteux en fonction notamment de la superficie à couvrir. De plus, cette solution ne s'adapte pas à des façades métalliques.

Le document FR2952079A1 présente un écran formé de boîtes qui sont maintenues sur une surface verticale au moyen de crochets posés sur des lisses traversantes, lisses qui sont elles-mêmes fixées au préalable sur la surface verticale. Assemblées, ces boîtes permettent par exemple de construire des écrans qui ne présentent qu'une seule face décorée. En fonction de la composition des écrans, ceux-ci peuvent être utilisés notamment dans le but d'isoler thermiquement des bâtiments par l'extérieur mais également de les végétaliser en intégrant dans les boîtes des végétaux. Comme évoqué dans le document précédent, l'installation de la solution décrite ici nécessite de percer la surface sur laquelle seront ensuite disposés des supports qui serviront à maintenir des boîtes, dont le contenu servira éventuellement à isoler les façades.

Par ailleurs, la France continue à légiférer pour contraindre la végétalisation d'espaces aménagés, notamment pour favoriser la perméabilité et l'infiltration des eaux pluviales (voir décret n°2023-1208 du 18 décembre 2023).

Ainsi, et lors de la rénovation de bâtiments, l'aspect de la gestion des eaux de pluie va venir s'ajouter à celui de l'isolation thermique et celui de la végétalisation des façades.

Dès lors, et afin de limiter leur impact environnemental, les bâtiments doivent consommer moins d'énergie pour un confort thermique acceptable, tout en favorisant la biodiversité et en jouant un rôle sur la régulation des eaux pluviales.

De nouvelles solutions doivent être développées pour prendre en compte ces trois contraintes.

### PRESENTATION DE L'INVENTION

La présente invention vise à pallier tout ou partie des inconvénients évoqués précédemment.

A cet effet, la présente invention vise un module isolant pour recouvrir tout ou partie d'au moins une façade ou d'au moins une toiture de bâtiment, s'installant en intérieur ou en extérieur, comportant une structure, comprenant une paroi avant, une paroi de fond située au niveau d'une partie inférieure de la paroi avant, deux parois latérales positionnées de part et d'autres de la paroi avant et de la paroi de fond, au moins une paroi de fixation située à l'opposé de la paroi avant, formant un support semi-ouvert pour contenir un substrat, et un système de fixation. Le module isolant végétalisé est remarquable en ce qu'il comporte un système de rétention d'eau et d'irrigation, ledit système comportant une réserve d'eau, au moins un conduit d'arrosage comportant un orifice d'entrée configuré pour capter l'eau de la réserve d'eau pour irriguer des racines d'au moins une plante positionnée dans un orifice de plantation de la paroi avant, ladite structure comportant au moins un trou de vidange disposé sur la paroi de fond pour évacuer le surplus d'eau présent dans le substrat.

Selon une caractéristique, le système de fixation est constitué d'une pluralité d'aimants néodymes.

Selon une autre caractéristique, le système de fixation est constitué d'une pluralité de chevilles d'isolations.

De façon avantageuse, la structure (10) est en acier galvanisé.

Selon une caractéristique, une plaque d'isolant thermique est positionnée à l'intérieur de la structure, ladite plaque étant positionnée entre les parois de fixation et le substrat.

De façon avantageuse, la structure est en polypropylène expansé recyclé. Selon une caractéristique, chaque conduit d'arrosage relie directement la réserve d'eau à l'orifice de plantation.

Selon une autre caractéristique, le module isolant végétalisé comprend en outre une mousse de rétention positionnée entre la paroi de fond et le substrat. Selon une autre caractéristique, la paroi avant comporte une partie inférieure biseautée vers l'intérieur.

Selon une autre caractéristique, la paroi arrière comporte en outre, sur sa face opposée à la paroi avant, deux éléments emboitables positionnés en quinconce l'un par rapport à l'autre.

Avantageusement, le système de rétention d'eau et d'irrigation comporte au moins un conduit principal d'évacuation du surplus d'eau accumulé dans la réserve d'eau, via un orifice de surverse.

De façon avantageuse, un embout est positionné au niveau de l'orifice de surverse du conduit principal d'évacuation, ledit embout comportant un couvercle, une bague, une pluralité d'entretoises créant un espace entre ledit couvercle et ladite bague pour laisser s'écouler le surplus d'eau. Avantageusement, le système de rétention d'eau et d'irrigation comporte une gouttière.

Enfin, la présente invention a également pour objet un bâtiment, recouvert au moins partiellement d'un ensemble de modules végétaux tel que présenté. Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés.

### BRÈVE DESCRIPTION DES FIGURES

Les figures sont données à titre purement illustratif pour une meilleure compréhension de l'invention sans en limiter la portée. Les différents éléments peuvent être représentés de manière schématique et ne sont pas nécessairement à la même échelle. Sur l'ensemble des figures, les éléments identiques ou équivalents portent la même référence numérique.

Il est ainsi illustré en :
Figure 1, une vue éclatée en perspective d'un module isolant végétalisé selon un premier mode de réalisation de l'invention ;
Figure 2, une vue de dessus en perspective d'un système de rétention et d'irrigation du module isolant végétalisé selon le premier mode de réalisation de l'invention ;
Figure 3, une vue arrière en perspective du module isolant végétalisé selon le premier mode de réalisation de l'invention ;
Figure 4, une vue en perspective d'un embout d'un conduit central d'évacuation du système de rétention et d'irrigation, selon le premier mode de réalisation de l'invention ;
Figure 5, une vue en perspective du module isolant végétalisé installé sur une façade d'un bâtiment ;
Figure 6, une vue éclatée et en perspective d'un module isolant végétalisé selon un deuxième mode de réalisation de l'invention ;
Figure 7, une vue avant et en perspective d'une structure du module isolant végétalisé selon le deuxième mode de réalisation de l'invention ;
Figure 8, une vue de dessus de la structure du module isolant végétalisé selon le deuxième mode de réalisation de l'invention ; et
Figure 9, une vue arrière d'une paroi avant de la structure du module isolant végétalisé selon le deuxième mode de réalisation de l'invention.

### DESCRIPTION DETAILLEE DE MODES DE REALISATION

Il convient de noter que certains éléments techniques bien connus de l'homme du métier sont ici décrits pour éviter toute insuffisance ou ambiguïté dans la compréhension de la présente invention.

Dans le mode de réalisation décrit ci-après, on fait référence à un module isolant végétalisé pour façades de bâtiments comportant divers éléments stabilisant la végétation et apportant une isolation thermique et phonique par l'extérieur supplémentaire aux bâtiments, ledit module s'installant notamment sur différents types de façades de bâtiments. L'usage du module isolant végétalisé en façade d'un bâtiment est pris en exemple, sans que cela ne soit une limite à la présente invention, ledit module pouvant également être utilisé en toiture.

Le module isolant végétalisé comporte avantageusement un système permettant de maîtriser l'écoulement des eaux utilisées pour irriguer la végétalisation plantée dans ledit module, lesdites eaux pouvant être les eaux pluviales ou les eaux provenant d'un réseau de distribution ou d'un forage. De plus, le module isolant végétalisé permet l'apport en engrais sous forme liquide.

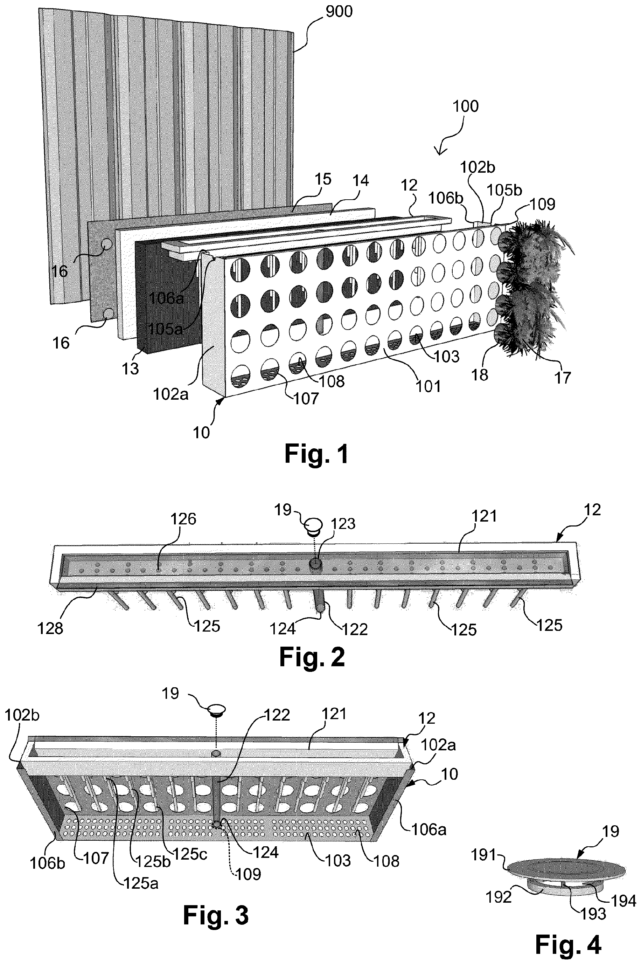

La figure 1 représente vue éclatée en perspective d'un module isolant végétalisé 100 selon un premier mode de réalisation de l'invention, comprenant principalement une structure 10, un système 12 de rétention d'eau et d'irrigation, un substrat 13, une plaque d'isolant thermique 14, un film pare-vapeur 15, un système de fixation 16, une pluralité de plantes 17, chaque plante 17 étant conditionnée dans un godet 18 biodégradable, ainsi qu'une façade 900 d'un bâtiment (non représenté ici) sur laquelle le dit module se fixe. La structure 10 comporte quatre parois 101, 102a,102b et 103, dont une paroi avant 101, une paroi de fond 103 située au niveau d'une partie inférieure de la paroi avant 101, et deux parois latérales 102a et 102b positionnées de part et d'autre de la paroi avant 101 et de la paroi de fond 103. La paroi avant 101 correspond à la paroi située du côté des plantes 17.

La paroi de fond 103 comporte au moins un trou de vidange 108 pour évacuer l'eau stagnante et limiter le développement de moisissure au niveau du substrat 13, ledit surplus étant dirigés dans un système d'évacuation des eaux pluviales.

Chaque paroi latérale 102a et 102b comporte respectivement une encoche 105a et 105b pour y loger un conduit d'irrigation (non représenté ici) d'un réseau de distribution d'eau externe ou d'un forage (non représentés ici).

En outre, la structure comporte au niveau de chaque paroi latérale 102a et 102b sur toute leur longueur, et sur leur bord opposé à celui où se situe la paroi avant 101, une paroi de fixation 106a et 106b respectivement.

La structure 10 ne comporte donc pas une paroi arrière reliant les parois latérales 102a et 102b, mais uniquement deux parois de fixations 106a et 106b qui ne sont pas en contact direct. Avantageusement, cette configuration de la structure 10 est plus légère en comparaison avec des structures de modules isolant végétalisé fabriqué dans des matériaux similaires, et comportant une paroi arrière. De même, cette configuration permet d'éviter la formation de condensation entre le module isolant végétalisé 100 et la façade 900. Préférablement, la structure 10 est en acier galvanisé, qui est un matériau recyclable intégralement, et qui de plus protège efficacement la façade 900 des intempéries et des chocs prolongeant ainsi sa durée de vie.

La paroi avant 101 comporte au moins un orifice de plantation 107 pour positionner individuellement le godet 18 de la plante 17 au niveau du substrat 13. L'orifice de plantation 107 comporte un diamètre qui n'est pas une limite à la présente invention. En effet, un même module isolant végétalisé 100 peut comporter des orifices de plantation 107 de diamètre différent par exemple. Plusieurs espèces de plantes 17 peuvent être plantées dans le module isolant végétalisé 100, créant ainsi un véritable jardin vertical sur la façade 900, jardin propice au développement d'une biodiversité autour de bâtiments, mais ayant également un effet sur la décarbonisation.

Le substrat 13 et la plaque d'isolation 14 sont positionnés à l'intérieur de la structure 10. Le substrat 13 est positionné juste derrière et en contact de la paroi avant 101.

Le substrat 13 est irrigué au moyen du système 12 de rétention d'eau et d'irrigation. Préférablement, le substrat 13 utilisé à une capacité de rétention d'eau supérieure à 25% de son volume.

La plaque d'isolant thermique 14 est positionnée juste derrière et en contact avec le substrat 13 et est préférablement en un matériau hydrophobe afin de ne pas être dégradé par l'humidité contenue dans le substrat 13.

Le système 12 de rétention d'eau et d'irrigation est positionné sur la partie supérieure du substrat 13, tout en se situant à l'intérieur de la structure 10. Un exemple de réalisation du système 12 est représenté dans la figure 2, et détaillé ultérieurement.

Dans ce mode de réalisation particulier, le module isolant végétalisé 100 est maintenu sur la façade 900 au moyen du système de fixation 16 qui est constitué dans cet exemple d'une pluralité d'aimants néodymes. Avantageusement, et pour des façades 900 métalliques, le système de fixation 16 permet de maintenir le module isolant végétalisé 100 sans percer lesdites façades. Au préalable de l'installation du module isolant végétalisé 100, le film pare-vapeur 15 est positionné sur la façade 900 et maintenu au moyen des aimants du système de fixation 16.

Le film pare-vapeur a une propriété anti-racinaire. Autrement, le filme pare-vapeur 15 a une capacité de résistance au déchirement qui pourrait être provoqué par la croissance des racines des plantes 17. Ainsi, l'utilisation du film pare-vapeur garantie une protection de la façade 900 contre l'humidité contenue dans le module isolant végétalisé 100.

Dans un autre mode de réalisation (non représenté ici), et pour des façades 900 en béton ou en bois, le système de fixation est constitué de chevilles d'isolations ou de vis traversant les parois de fixation 106a et 106b.

Dans un autre mode de réalisation (non représenté ici), une deuxième plaque d'isolant thermique est positionnée entre le substrat et la face arrière de la paroi avant 101 afin de limiter les variations de température au niveau des racines des plantes 17.

La figure 2 représente une vue de dessus et en perspective du système 12 de rétention d'eau et d'irrigation du module isolant végétalisé 100.

Le système 12 de rétention d'eau et d'irrigation comporte une réserve d'eau 121, un conduit principal d'évacuation 122 et une pluralité de conduits d'arrosage 125 dans lequel l'eau d'irrigation circule et passe au travers d'orifices de faibles diamètres (non représentés ici). Ainsi, une irrigation lente se produit au niveau du substrat 13, limitant également l'excès d'arrosage des plantes.

Préférablement, le système 12 de rétention d'eau et d'irrigation est fabriqué en polychlorure de vinyle (PVC) ou en polypropylène expansé recyclé. Avantageusement, le fait que le système 12 de rétention d'eau et d'irrigation soir intégré dans le module isolant végétalisé 100 facilite l'installation de la pluralité desdits modules sur la façade 900.

Chaque conduit d'arrosage 125 a une longueur variable et comporte un orifice d'entrée 126 par lequel l'eau retenue dans la réserve d'eau 121 s'engouffre pour ensuite être diffusée en goutte-à-goutte au plus près des racines des plantes 17 qui se sont développées dans le substrat 13.

Au moment du remplissage de la réserve d'eau 121, les conduits d'arrosage 125 sont saturés en eau, le débit d'arrosage étant très bas du fait de la diffusion en goutte-à-goutte.

Une fois remplie, la réserve d'eau 121 se vide progressivement. Avantageusement, cela évite la nidification d'insectes nuisibles tels que les moustiques.

Pour un arrosage complet des modules isolants végétalisés 100 de la façade 900, l'arrosage s'effectuant par le haut de la façade 900, on note et programme le temps nécessaire pour remplir la réserve d'eau 121 du module isolant végétalisé 100 se situant à la base de ladite façade.

Le conduit principal d'évacuation 122 comporte un orifice de surverse 123 ainsi qu'un orifice de sortie 214, et a pour fonction de déverser le trop plein d'eau contenue dans la réserve d'eau 121, vers une réserve d'eau d'un module isolant végétalisé positionné juste en dessous. Ce déversement est réalisé par un simple écoulement gravitaire et sans nécessiter l'utilisation d'une pompe pour irriguer les modules situés en position inférieure.

Afin d'éviter que l'eau circulant dans le conduit principal d'évacuation 122 ne s'écoule directement dans le conduit principal du système de rétention d'eau et d'irrigation inférieur, ledit système comporte un embout 19 positionné au niveau de l'orifice de surverse 123, ledit embout s'opposant à l'écoulement gravitaire de l'eau. En revanche, l'orifice de surverse 13 est obstrué uniquement en partie par l'embout 19 pour que le surplus potentiel d'eau puisse y être déversé si besoin.

Pour optimiser la récupération d'eau de pluie, ou dans le cas où l'eau présente en surplus dans la réserve d'eau 121, le système 12 de rétention d'eau et d'irrigation comporte une gouttière 128 pour récupérer l'eau qui ruissèle sur la paroi avant 101 d'un module 100 situé au-dessus.

La figure 3 représente une vue arrière et en perspective du module isolant végétalisé 100, sans le substrat 13 ni la plaque d'isolant thermique. Sur la figure 3 il est possible de constater l'insertion de l'orifice de sortie 124 dans un orifice d'évacuation 109, représenté en traits pointillés.

Par ailleurs, dans le cas du module isolant végétalisé 100 comportant trois rangées et douze colonnes d'orifice de plantation 107 sur la paroi avant 101, le système 12 de rétention d'eau et d'irrigation comporte autant de conduit d'arrosage 125 que d'orifices de plantation 107. Dans cet exemple, le système 12 de rétention d'eau et d'irrigation comporte donc trente-six conduits d'arrosage 125. De plus, pour chaque rangée d'orifice de plantations 107, et afin que l'irrigation soit effectuée au plus proche des racines des plantes 17, les conduits d'arrosage 125 ont une longueur différente et qui est fonction de la position des rangées. Par exemple un conduit d'arrosage 125a a une longueur qui est adaptée pour arroser les plantes 17 sont positionnées dans la rangée du haut du module d'isolation et de végétalisation 100. De manière analogue, un conduit d'arrosage 125b a une longueur qui est adaptée pour arroser les plantes 17 positionnées dans la rangée du milieu des orifices de plantation 107, et un conduit d'arrosage 125c a une longueur qui est adaptée pour arroser les plantes 17 positionnées dans la rangée du bas des orifices de plantation 107. Avantageusement, et une fois une conception adaptée effectuée, le système 12 de rétention d'eau et d'irrigation peut s'installer dans des modules végétalisés déjà existants.

La figure 4 représente une vue en perspective de l'embout 19.

L'embout 19 comporte un couvercle 191, une bague 192, une pluralité d'entretoises 193 créant un espace 194 entre ledit couvercle et ladite bague. L'embout 19 s'installe au niveau de l'orifice de surverse 123 du conduit principal d'évacuation 122, sans l'obstruer. La bague 192 s'adapte au diamètre extérieur du conduit principal d'évacuation 122. Par ailleurs, le couvercle 191 a un diamètre qui est supérieur au diamètre extérieur du conduit principal d'évacuation 122.

Les entretoises 193 sont suffisamment longues pour créer l'espace 194 entre le couvercle 191 et la bague 192 pour que le surplus d'eau contenue dans la réserve d'eau 121 puisse se déverser dans le conduit principal d'évacuation 122.

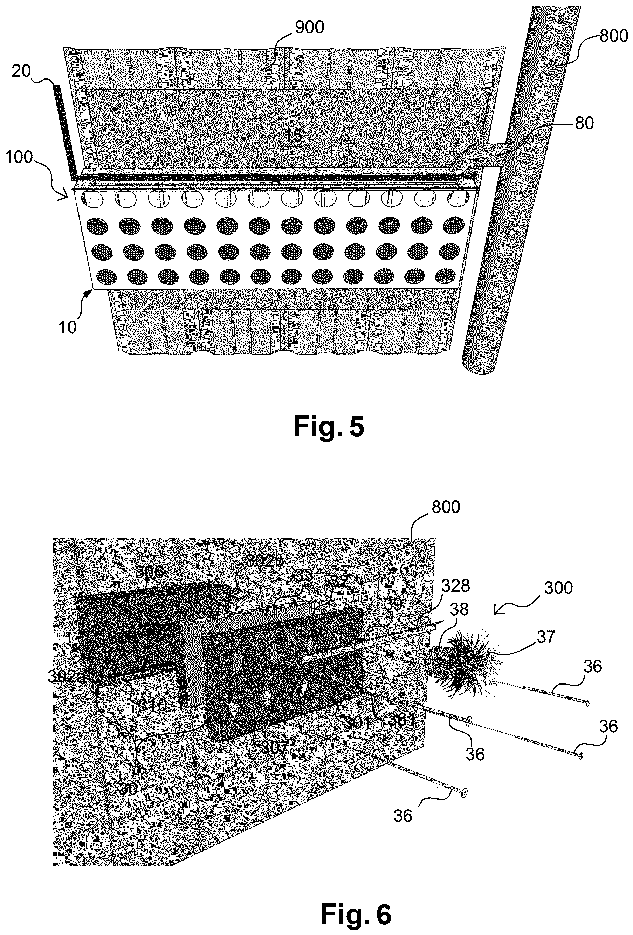

La Figure 5 représente une vue en perspective du module isolant végétalisé 100 installé sur la façade 900 d'un bâtiment. Sur la figure 5, un seul module isolant végétalisé 100 est représenté, sans plantes 17, afin de faciliter la visibilité de la configuration. Ainsi, en utilisation normale, une pluralité de modules isolants végétalisés sont installés tout ou en partie sur la superficie de façade 900, en dessous et de part et autre du module présent sur la figure 5. Par ailleurs, le module isolant végétalisé 100 pris en exemple sur la figure 5 est un module qui est positionné sur une partie qui est la plus en hauteur de la partie végétalisée de la façade 900.

Sur la figure 5, un conduit d'irrigation 20 est installé au niveau du module isolant végétalisé 100, et logé dans les encoches 106a et 106b, visible sur la figure 1.

En outre, le module isolant végétalisé est relié au moyen d'un collecteur 80 à un conduit de descente 800 qui canalise les eaux pluviales provenant d'une toiture du bâtiment.

Avantageusement, un unique conduit d'irrigation peut être utilisé au niveau des modules isolants végétalisés 100 qui sont installés le plus en hauteur, le système 12 de rétention et d'irrigation de chacun des modules communiquant avec les modules 100 situés en dessous, et permettant de les irriguer par écoulement gravitaire, autrement dit sans utilisation supplémentaires de pompes hydrauliques à eau et/ou à fort débit.

Une pompe (non représentée ici) dont le débit d'arrosage est réglable et pilotable suivant les heures et jours de la semaine est utilisée pour faire circuler l'eau dans le conduit d'irrigation 20.

Dans un mode de réalisation particulier, il est également possible de pomper l'eau de bassins de rétention d'eau pluviale, se trouvant à proximité de la façade 900 végétalisée. Ainsi, quand le niveau d'eau est suffisant, les ressources en eau sont mieux gérées. Des poissons peuvent être élevés dans ces bassins afin de lutter contre l'apparition d'insectes nuisibles, tels que des moustiques. Par ailleurs, la présence de poissons dans ces bassins favorise le développement de bactéries qui vont créer des nitrates et des phosphates, contribuant ainsi à un apport d'engrais naturel. Grâce au principe d'aquaponie, un écosystème propice au développement des plantes 17 est ainsi obtenu. La figure 6 représente une vue éclatée et en perspective d'un module isolant végétalisé 200 selon un deuxième mode de réalisation de l'invention.

Le module isolant végétalisé 300 comprend principalement une structure 30, un système 32 de rétention d'eau et d'irrigation, un substrat 33, un système de fixation 36, une pluralité de plantes 37, chaque plante 37 étant conditionnée dans un godet 38 biodégradable, une gouttière 328 préférablement en acier galvanisé. Le module isolant végétalisé 300 est maintenu sur une façade 800 d'un bâtiment (non représenté ici).

La structure 30 comporte cinq parois 301, 302a,302b, 303 et 306, dont une paroi avant 301, une paroi de fond 303 située au niveau d'une partie inférieure de la paroi avant 301, et deux parois latérales 302a et 302b positionnées de part et d'autre de la paroi avant 301 et de la paroi de fond 303. La paroi avant 301 correspond à la paroi située du côté des plantes 17. La structure 30 comporte également une paroi arrière 306, située à l'opposé de la paroi avant, la paroi arrière 306 étant la paroi qui est en contact avec la façade 800.

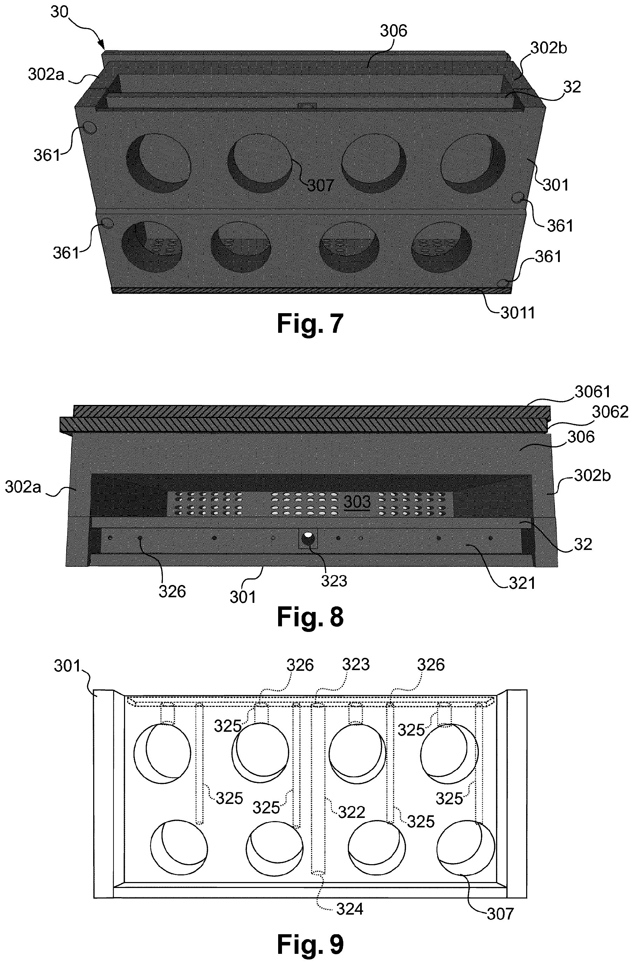

De manière avantageuse, le système 32 de rétention d'eau et d'irrigation est incorporé dans la paroi avant 301 de la structure 30, comme cela est visible sur la figure 9.

La paroi du fond 303 comporte au moins un trou de vidange 308 pour évacuer l'eau stagnante et limiter le développement de moisissure au niveau du substrat 33. Une mousse de rétention 310 est positionnée au-dessus des trous de vidange 308 pour empêcher que le substrat 33 obstrue lesdits trous et ne se déverse dans un module situé en dessous.

Chaque paroi latérale 302a et 302b comporte une encoche (non représentée ici) pour y loger un conduit d'irrigation (non représenté ici).

Préférablement, la structure 30 est en polypropylène expansé recyclé, sans que cela ne présente une limite à l'invention, d'autres matériaux aux propriétés similaires pouvant être utilisés.

La paroi avant 301 comporte au moins un orifice de plantation 307 pour positionner individuellement le godet 38 de la plante 37 au niveau du substrat 33.

Le substrat 33 est positionné à l'intérieur de la structure 30. Le substrat 33 est positionné juste derrière et en contact de la paroi avant 301.

Le substrat 33 est directement irrigué au moyen du système 32 de rétention d'eau et d'irrigation.

La paroi arrière 306 a pour fonction d'être une plaque d'isolant thermique supplémentaire.

Comme évoqué précédemment, le système 32 de rétention d'eau et d'irrigation est intégré dans la paroi avant 301.

Dans ce mode de réalisation particulier, le module isolant végétalisé 300 est maintenu sur la façade 800, qui est une façade en béton, au moyen du système de fixation 36 qui est constitué de chevilles d'isolations.

Dans un autre mode de réalisation (non représenté ici), et pour des façades 800 métalliques ou comportant sur une partie de leur surface des éléments métalliques porteurs ou sur des supports et/ou lisses métalliques, le système de fixation 36 est constitué d'une pluralité d'amants en néodyme qui sont collés sur la face externe de la paroi arrière 306.

La figure 7 représente une vue avant et en perspective de la structure 30 du module isolant végétalisé 300, une fois que ladite structure est assemblée. Dans cet exemple, la structure 30 comporte six orifices de plantation 307, sans que cela ne présente une limite à la présente invention.

Avantageusement, la paroi avant 301 comporte une partie inférieure 3011 qui est biseautée en retrait par rapport à la paroi avant pour favoriser l'écoulement de l'eau sur ladite paroi vers le système 32 de rétention d'eau et d'irrigation d'un module 300 situé en dessous. La récupération de l'eau ruisselant sur la paroi avant 101 est alors maximisée en utilisant en complément la gouttière 328.

Dans un mode de réalisation alternatif, la paroi 301 comporte une partie supérieure (non représentée ici) qui est biseautée, dont une pente favorise l'écoulement de l'eau provenant de la paroi avant 301 du module 300 situé au dessue, vers le système 32 de rétention d'eau et d'irrigation.

La figure 8 et la figure 9 représentent respectivement une vue de dessus de la structure 30 et une vue arrière de la paroi avant 101 de ladite structure.

Le système 32 de rétention d'eau et d'irrigation comporte une réserve d'eau 321, un conduit principal d'évacuation 322, ledit conduit comportant à une extrémité supérieure un orifice de surverse 323 qui est surélevé par rapport au fond de la réserve d'eau 321 et à une extrémité inférieure un orifice de sortie 324, le fond de la réserve d'eau 321 comporte au moins un orifice d'entrée 126 d'un conduit d'arrosage 325. Comme précédemment, le module isolant végétalisé 300 comporte un embout (non représenté ici) qui est positionné au niveau de l'orifice de surverse 323. L'embout s'oppose à l'écoulement gravitaire de l'eau provenant d'un module situé au-dessus, tout en permettant au surplus d'eau contenu dans la réserve d'eau 321 de se déverser dans le conduit principal d'évacuation 322 via l'orifice de surverse 323. Le surplus d'eau est ainsi évacué du module isolant végétalisé 300 par l'orifice de sortie 324, qui débouche vers un autre module situé en dessous. Chaque conduit d'arrosage 325 alimente en eau l'orifice de plantation 307 qui lui correspond afin d'irriguer les racines des plantes 327 au plus près et ainsi optimiser l'apport en eau et minimiser les pertes en eau.

Avantageusement la paroi arrière 306 comporte en outre, sur sa face qui est opposée à la paroi avant, deux éléments emboitables 3061 et 3062 positionnés en quinconce l'un par rapport à l'autre, et représentés sur la figure 8 en traits hachurés. Ainsi, lors de l'installation des modules isolants végétalisés 300, les structures 30 qui se suivent, à la fois horizontalement mais aussi verticalement, s'imbriquent les unes avec les autres via les éléments emboitables 3061 et 3062. Cette configuration résout le problème des ponts thermiques qui sont présents entre deux modules d'isolation.

## Revendications

1. Module isolant végétalisé (100, 300) pour recouvrir tout ou partie d'au moins une façade ou d'au moins une toiture de bâtiment, s'installant en intérieur ou en extérieur, comportant une structure (10, 30), comprenant une paroi avant (101, 301), une paroi de fond (103, 303) située au niveau d'une partie inférieure de la paroi avant (101, 301), deux parois latérales (102a, 102b, 302a, 302b) positionnées de part et d'autres de la paroi avant (101, 301) et de la paroi de fond (103, 303), au moins une paroi de fixation (106a, 106b, 306) située à l'opposé de la paroi avant (101, 301), formant un support semi-ouvert pour contenir un substrat (13, 33), et un système de fixation (16 ,36), ledit module étant **caractérisé en ce qu'**il comporte un système (12, 32) de rétention d'eau et d'irrigation, ledit système comportant une réserve d'eau (121, 321), au moins un conduit d'arrosage (125, 325) comportant un orifice d'entrée (126, 326) configuré pour capter l'eau de la réserve d'eau (121, 321) pour irriguer des racines d'au moins une plante (17, 37) positionnée dans un orifice de plantation (107, 307) de la paroi avant (101, 301), ladite structure comportant au moins un trou de vidange (108, 308) disposé sur la paroi de fond (103, 303) pour évacuer le surplus d'eau présent dans le substrat (13, 33).

2. Module (100, 300) selon la revendication 1, dans lequel le système de fixation (16 ,36) est constitué d'une pluralité d'aimants néodymes.

3. Module (100, 300) selon la revendication 1, dans lequel le système de fixation (16, 36) est constitué d'une pluralité de chevilles d'isolations.

4. Module (100) selon l'une quelconque des revendications 1 à 3, dans lequel la structure (10) est en acier galvanisé.

5. Module (100) selon la revendication 4, comportant en outre une plaque d'isolant thermique (14) positionnée à l'intérieur de la structure (10), ladite plaque étant positionnée entre les parois de fixation (106a, 106b) et le substrat (13).

6. Module (300) selon l'une quelconque des revendications 1 à 3, dans lequel la structure (30) est en polypropylène expansé recyclé.

7. Module (300) selon la revendication 6, dans lequel chaque conduit d'arrosage (325) relie directement la réserve d'eau (321) à l'orifice de plantation (307).

8. Module (300) selon la revendication 6 ou la revendication 7, comprenant en outre une mousse de rétention (310) positionnée entre la paroi de fond (303) et le substrat (33).

9. Module (300) selon l'une quelconque des revendications 6 à 8, dans lequel la paroi avant (301) comporte une partie inférieure (3011) biseautée vers l'intérieur.

10. Module (300) selon l'une quelconque des revendications 6 à 9, dans lequel la paroi arrière (306) comporte en outre, sur sa face opposée à la paroi avant (301), deux éléments emboitables (3061, 3062) positionnés en quinconce l'un par rapport à l'autre.

11. Module (100, 300) selon l'une quelconque des revendications précédentes, dans lequel le système (12, 32) de rétention d'eau et d'irrigation comporte au moins un conduit principal d'évacuation (122, 322) du surplus d'eau accumulé dans la réserve d'eau (121, 321), via un orifice de surverse (123, 323).

12. Module (100, 300) selon la revendication 11, dans lequel un embout (19) est positionné au niveau de l'orifice de surverse (123, 323) du conduit principal d'évacuation (122, 322), ledit embout comportant un couvercle (191), une bague (192), une pluralité d'entretoises (193) créant un espace (194) entre ledit couvercle et ladite bague pour laisser s'écouler le surplus d'eau.

13. Module (100, 300) selon l'une quelconque des revendications précédentes, dans lequel le système (12, 32) de rétention d'eau et d'irrigation comporte une gouttière (128 328).

14. Bâtiment recouvert au moins partiellement d'un ensemble de modules isolants végétalisés (100, 300) selon l'une des revendications 1 à 13.
